# EUROPEAN PATENT SPECIFICATION

(11) **EP 4 417 960 B1**
(45) Date of publication and mention of the grant of the patent: **09.09.2026**
(21) Application number: 23731078.4
(22) Date of filing: 16.03.2023
(51) Int. Cl.: H01M 10/0525, H01M 10/48, H01M 10/42, H01M 4/04, H01G 9/04, G01N 5/04, F26B 3/00, H01M 4/139, F26B 3/04, F26B 5/04, F26B 25/22, F26B 21/30, F26B 13/10

(54) **METHOD, APPARATUS, AND MEDIUM FOR DETECTING COMPLIANCE OF BATTERY ELECTRODE SHEET**
VERFAHREN, VORRICHTUNG UND MEDIUM ZUM ERKENNEN DER RICHTLINIENKONFORMITÄT EINER BATTERIEELEKTRODENFOLIE
PROCÉDÉ, APPAREIL ET SUPPORT DE DÉTECTION DE LA CONFORMITÉ D'UNE FEUILLE D'ÉLECTRODE DE BATTERIE

(30) Priority: 04.01.2023 CN 202310007535
(43) Date of publication of application: 21.08.2024
(73) Proprietor: Contemporary Amperex Technology (Hong Kong) Limited, Central, Central And Western District (HK)
(72) Inventor: YANG, Di, Ningde, Fujian 352100 (CN); SONG, Lei, Ningde, Fujian 352100 (CN); CHEN, Shengdong, Ningde, Fujian 352100 (CN)
(74) Representative: Rowlands, Stuart Michael
(86) International application number: PCT/CN2023/081863
(87) International publication number: WO 2024/146000

(56) References cited:
- EP-A1- 4 083 608
- EP-A1- 4 084 112
- WO-A1-2021/251641
- CN-A- 102 945 753
- CN-A- 102 945 753
- CN-A- 105 301 081
- CN-A- 108 287 171
- CN-U- 206 020 277
- US-A1- 2019 140 253

## Description

### Technical Field

The present application relates to battery management technologies, and in particular to, a method, an apparatus, a device, and a medium for detecting a compliance of a battery electrode sheet.

### Background

With the development of science and technology, more and more electrical apparatuses will carry batteries to implement their operation functions.

For example, lithium batteries not only bring people convenience and clean energy, but also cause huge potential safety hazard. For example, explosion of the lithium batteries has severe consequences. Therefore, quality of the lithium batteries has become a top priority, and on-line inspection has also become necessary for each process in the production of the lithium batteries. Wherein, an electrode sheet is an important constituent part in a structure of the lithium batteries. For example, if unreasonable coating occurs in a process of coating the electrode sheet, abnormal moisture comprised in the electrode sheet will be caused, and lithium plating and an abnormal formation curve will also be caused in an initial test of a lithium-ion battery, thereby resulting in a great potential safety hazard on the battery, and seriously affecting safe use of the battery.

Therefore, how to detect a compliance of the electrode sheet has become a problem to be solved by those skilled in the art.

EP4083608A1 discloses an apparatus for evaluating drying quality of an electrode, and the apparatus includes: an oven configured to provide a space in which an electrode is dried; a measuring unit configured to be positioned at an outlet of the oven and measure a color coordinate value of an electrode active material layer with respect to the dried electrode; and an determination unit configured to determine whether the electrode is dry from the color coordinate value, wherein the determination unit sets a reference value, and determines that a dry state of the electrode is defective if the measured color coordinate value is less than the reference value, and a difference between the measured color coordinate value and the reference value is more than a preset value.

CN102945753A discloses a drying method of an organic supercapacitor pole piece and relates to the technical field of supercapacitor manufacture. According to the method, samples are subjected to baking, weighing and moisture test, the corresponding weight after drying is recorded, then, samples and mass-produced products to be dried are baked in the same method, and when the samples are weighed, whether the water content of the pole piece in the batch of products is qualified or not can be judged. The method is used for carrying out drying treatment on the organic supercapacitor pole piece, the operation can be simplified, the work efficiency is improved, in addition, a battery cell cannot be damaged, and the production cost is reduced.

EP4084112A1 discloses an electrode drying apparatus and an electrode drying method, and the electrode drying apparatus includes: an oven configured to provide a space in which the electrode is dried and to include a hot air nozzle or an infrared heater; a color coordinate measuring unit configured to be positioned at an outlet of the oven and measure a color coordinate value of an electrode active material layer with respect to the dried electrode; and a controller configured to analyze a drying result of the electrode from the color coordinate value, determine whether the electrode is defective in drying, and control a drying condition of the electrode.

US2019140253A1 discloses a system for manufacturing an electrode for a secondary battery, which includes an active material drying unit configured to dry an active material coated on an electrode current collector, and a tester unit configured to measure a dried state of the active material by performing a scratch test to the dried active material.

### Summary of the Invention

Examples of the present application provide a method, an apparatus, a device, and a medium for detecting a compliance of a battery electrode sheet, thereby solving a problem that a potential safety hazard tends to exist because of failure to detect the compliance of the battery electrode sheet in a related art.

According to one aspect of examples of the present application, a method for detecting a compliance of a battery electrode sheet is provided, according to the appended independent claim 1.

Optionally, in another example based on the above method of the present application, before drying the to-be-detected electrode sheet in the drying apparatus for the preset duration, the method further comprises: acquiring a preset drying time association table; and selecting the preset duration matching the first weight based on the drying time association table; or determining the number of to-be-detected electrode sheets, and selecting the preset duration matching the number based on the drying time association table. The technical solutions of the examples of the present application are applied to select reasonable drying durations for different weights or different numbers of electrode sheets according to preset association information in a targeted manner, thereby ensuring that moisture comprised in the electrode sheet is completely dried, and then achieving the purpose of subsequently determining the reasonable coating degree of each electrode sheet according to the weight ratio of the moisture value in each electrode sheet in a targeted manner.

The determining the detection result of the to-be-detected electrode sheet based on the ratio of the drying difference to the second weight comprises: determining a material attribute of the to-be-detected electrode sheet, and selecting a preset ratio range matching the material attribute; and determining the detection result of the to-be-detected electrode sheet based on a size relationship between the ratio of the drying difference to the second weight and the preset ratio range. The technical solutions of the examples of the present application are applied to select reasonable ratios for electrode sheets with different material attributes according to the preset association information in a targeted manner, thereby achieving the purpose of subsequently determining the reasonable coating degree of each electrode sheet according to the weight ratio of the moisture value in each electrode sheet in a targeted manner.

The determining the material attribute of the to-be-detected electrode sheet, and selecting the preset ratio range matching the material attribute comprise: determining historical storage information of the to-be-detected electrode sheet, wherein the historical storage information comprises a historical storage environment and a historical storage duration; and selecting the preset ratio range matching the material attribute based on the historical storage information. The technical solutions of the examples of the present application are applied to select reasonable ratios for electrode sheets with different material attributes in different storage environments for different storage durations according to the preset association information in a targeted manner, thereby avoiding failure to accurately ascertain a reasonable degree of reasonable coating of the electrode sheet due to unreasonable selection of the ratio.

After the selecting the preset ratio range matching the material attribute, the method further comprises: determining that the detection result of the to-be-detected electrode sheet is compliant when detecting that the ratio of the drying difference to the second weight is within the preset ratio range; and determining that the detection result of the to-be-detected electrode sheet is not compliant when detecting that the ratio of the drying difference to the second weight is beyond the preset ratio range. The technical solutions of the examples of the present application are applied to compare the moisture value comprised in the electrode sheet obtained by drying with its dead weight, and conclude that the detection result is not compliant only when determining that a ratio of the moisture value to a total weight of each electrode sheet is small, thereby not only avoiding a disadvantage of a high moisture content of the electrode sheet caused by too heavy coating in the process of coating the electrode sheet in a related art, but also avoiding a problem of affecting the battery performance due to too little coating in the process of coating the electrode sheet.

Optionally, in another example based on the above method of the present application, after collecting the first weight corresponding to the to-be-detected electrode sheet, the method further comprises: determining whether the first weight corresponding to the to-be-detected electrode sheet is within a preset weight range; and drying the to-be-detected electrode sheet in the drying apparatus for the preset duration when the first weight corresponding to the to-be-detected electrode sheet is within the preset weight range. The technical solutions of the examples of the present application are applied to first detect a weight of the electrode sheet before detecting the moisture content of the electrode sheet, preliminarily ascertain that the coating degree of the electrode sheet is reasonable only when the electrode sheet is determined to be within the preset weight range, and subsequently start a step of detecting the moisture content of the electrode sheet.

Optionally, in another example based on the above method of the present application, before the collecting the first weight corresponding to the to-be-detected electrode sheet, the method further comprises: acquiring an electrode sheet image corresponding to the to-be-detected electrode sheet, and inputting the electrode sheet image into an image detection model; recognizing a color feature and a brightness feature corresponding to the electrode sheet image using the image detection model; and drying the to-be-detected electrode sheet in the drying apparatus for the preset duration when detecting that the color feature and the brightness feature satisfy a preset condition. The technical solutions of the examples of the present application are applied to first detect a color and a brightness of the electrode sheet image before detecting the moisture content of the electrode sheet, and preliminarily ascertain whether the coating degree of the electrode sheet is reasonable by comparing the color and the brightness with the preset condition, thus determining whether to subsequently start the step of detecting the moisture content of the electrode sheet.

Optionally, in another example based on the above method of the present application, after the determining the detection result of the to-be-detected electrode sheet based on the ratio of the drying difference to the second weight, the method further comprises: establishing a mapping relationship between the to-be-detected electrode sheet, the corresponding detection result, and a corresponding separator identifier; and storing the mapping relationship in a preset storage area; and receiving a collection instruction sent from a battery detection system, extracting the mapping relationship from the storage area, and sending the mapping relationship to the battery detection system. The technical solutions of the examples of the present application are applied to automatically store a relationship between a detection result of each electrode sheet and a separator of the electrode sheet, to facilitate subsequent retrieval at any moment when query is required.

According to another aspect of examples of the present application, an apparatus for detecting a compliance of a battery electrode sheet is provided, according to the appended independent claim 6. The technical solutions of the examples of the present application are applied to compare a moisture value comprised in the electrode sheet obtained by drying with its dead weight, and determine a reasonable coating degree of each electrode sheet according to a weight ratio of the moisture value in each electrode sheet in a targeted manner, thereby avoiding a disadvantage of an abnormal moisture content of the electrode sheet caused by unreasonable coating in a process of coating the electrode sheet in a related art.

According to still another aspect of examples of the present application, an electronic device is provided, comprising:
a memory configured to store executable instructions; and
a processor configured to execute the executable instructions with the memory to complete operations of the method for detecting a compliance of a battery electrode sheet according to any one of the above descriptions.

According to yet another aspect of examples of the present application, a computer-readable storage medium is provided, according to the appended independent claim 7.

The dependent claims describe advantageous embodiments.

The above description merely provides an overview of the technical solutions of the present application. In order to more clearly understand the technical means of the present application, the present application may be implemented according to the content of the specification, and in order to make the above and other objectives, features, and advantages of the present application more obvious and understandable, specific embodiments of the present application are listed below.

### Description of Drawings

By reading the detailed description of the preferred embodiments below, various other advantages and benefits will become apparent to those of ordinary skills in the art. The drawings are merely used to show preferred embodiments, and are not considered to impose any limitation on the present application. Moreover, in all of the drawings, the same parts are represented by the same reference numerals. In the figures:
Fig. 1a is a schematic diagram of an electrode sheet coating process presented in the present application;
Fig. 1b is a schematic diagram of another electrode sheet coating process presented in the present application;
Fig. 2 is a schematic diagram of a method for detecting a compliance of a battery electrode sheet presented in the present application;
Fig. 3 is a schematic flowchart of a method for detecting a compliance of a battery electrode sheet presented in the present application;
Fig. 4 is a schematic structural diagram of an electronic apparatus provided in an example of the present application;
Fig. 5 is a schematic structural diagram of an electronic device provided in an example of the present application; and
Fig. 6 is a schematic diagram of a storage medium provided in an example of the present application.

### Detailed Description

Now, exemplary examples of the present application will be described in detail with reference to the accompanying drawings. It should be noted that: unless otherwise specified, relative arrangement, digital expressions, and values of the components and steps described in these examples do not limit the scope of the present application.

Further, it should be understood that, for ease of description, dimensions of various parts shown in the drawings are not drawn according to actual proportional relations.

The following description of at least one exemplary example is in fact merely illustrative, and does not serve as any limitation to the present application and its application or use.

The techniques, methods and devices known to those of ordinary skills in the relevant art may not be discussed in detail, but where appropriate, the techniques, methods and devices shall be considered as a part of the specification.

It should be noted that: similar reference numerals and letters represent similar items in the following figures, so that once an item is defined in a figure, it will not be further discussed in subsequent figures.

In addition, the technical solutions among the examples of the present application may be combined with each other, provided that the combination of the technical solutions can be implemented by those of ordinary skills in the art. When the combination of the technical solutions is contradictory or cannot be implemented, the combination of the technical solutions should be considered absent, and is not encompassed within the scope of protection claimed in the present application.

It should be noted that all directional indications (such as up, low, left, right, front, behind, ...) in the examples of the present application are only used to explain a relative position relationship, movement, etc. among components under a particular pose (as shown in the figures), and will change accordingly if the particular pose changes.

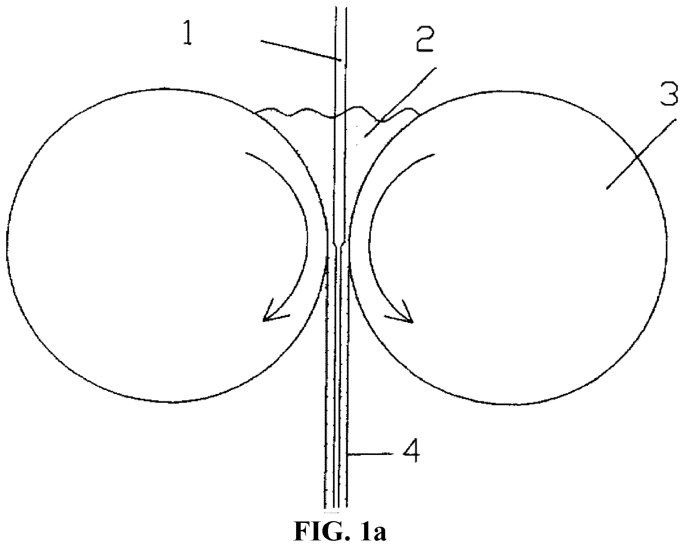

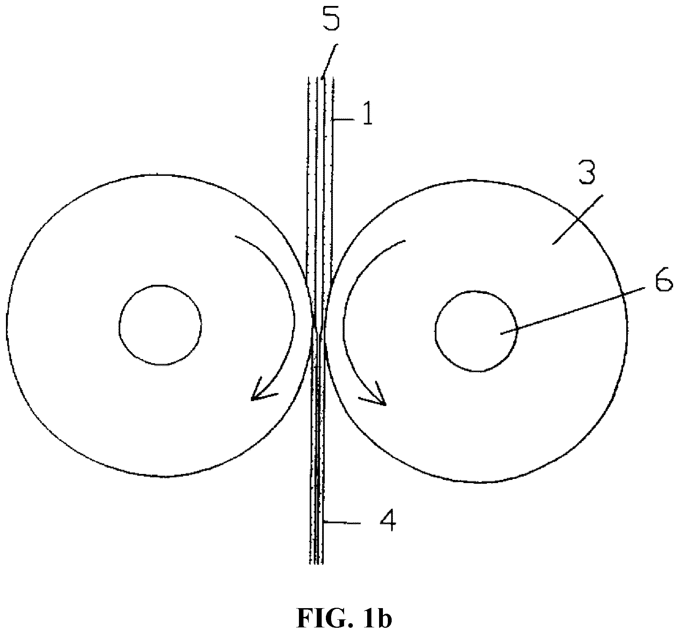

The method for detecting a compliance of a battery electrode sheet according to exemplary embodiments of the present application will be described below with reference to Fig. 1-Fig. 3. It should be noted that the following application scenarios are shown only for the purpose of understanding of the principle of the present application, and do not impose any limitation on the embodiments of the present application in this aspect. On the contrary, the embodiments of the present application may be applied to any applicable scenario.

In related technologies, with the rapid development of lithium-battery technologies, lithium batteries are gradually widely applied to new-energy vehicles.

The lithium batteries not only bring people convenience and clean energy, but also cause huge potential safety hazard. Explosion of the lithium batteries has severe consequences. Therefore, quality of the lithium batteries has become a top priority, and on-line inspection has also become necessary for each process in the production of the lithium batteries. An electrode sheet is an important constituent part in a structure of the lithium batteries. For example, if unreasonable coating occurs in a process of coating the electrode sheet, abnormal moisture comprised in the electrode sheet will be caused, and lithium plating and an abnormal formation curve will also be caused in an initial test of a lithium-ion battery, thereby resulting in a great potential safety hazard on the battery, and seriously affecting safe use of the battery.

As an example, preparation of the electrode sheet of the lithium batteries is described in the present application:
An internal structure of the lithium batteries comprises a battery shell, an electrode, a separator, an electrolyte solution, and a sealing material; and an internal structure of an electrode assembly of the batteries comprises three layers: a positive electrode sheet, a negative electrode sheet, and a separator therebetween. In an implementation of an example of the present application, the electrode assembly may be inserted into a nickel-coated steel shell in such a way that a negative tab of the electrode assembly contacts with the bottom of the battery shell, the positive electrode sheet can contact with a battery cover through a positive tab; and a seal ring of an insulating polymer material is inserted between an upper cover and a case to form a battery cell after sealing.

As an example, an appropriate additive may be added into an electrode sheet material, and is generally selected from the following metals, comprising niobium, cobalt, cadmium, molybdenum, tin, lead, lithium, sodium, potassium, magnesium, aluminum, calcium, zinc, zirconium, and titanium, and copper oxides. It is mainly intended to avoid a high voltage phenomenon of the battery on commencement of discharge, and effectively reduce a phenomenon of battery expansion of the lithium batteries after discharge.

As another example, an aluminum mesh has a thickness from 0.30 to 0.45 mm, a diamond-shaped mesh aperture, and an aperture size of (1.2-2.0) × (2.0-2.5) mm.

In an implementation, two coating methods below are available for the electrode sheet:
One of the coating methods is slurrying method: as shown in Fig. 1a, heat treated pyrite, compressed acetylene black, graphite, and an additive are fully mixed to form sufficiently mixed powder, which is poured into a mixer, and may be heated by steam heating or water bath heating or electric heating in a dividing wall of the mixer with a heating temperature controlled at 40-90°C. Deionized water and industrial alcohol are successively added, and the mixture is stirred for 20-70 min. Then, a polytetrafluoroethylene emulsion is added, and the mixture is quickly stirred to form an ointment 2. The sufficiently mixed ointment is applied on the aluminum mesh 1, compressed into a sheet using a twin-roller machine 3, and then dried through a tunnel furnace at 180-200°C or dried by other methods. Then, the dried ointment is repeatedly rolled using a roller machine to form a powder sheet 4 with a certain thickness, which may be controlled at 0.3-0.55 mm, and is preferably controlled at 0.4-0.45 mm.

The other coating method is film rolling: as shown in Fig. 1b, heat treated pyrite, compressed acetylene black, graphite, and additive are sufficiently mixed, then industrial alcohol and a polytetrafluoroethylene emulsion are added, then the polytetrafluoroethylene emulsion is sufficiently dispersed, then deionized water is added, and the mixture is stirred to form an ointment. The resulting ointment is rolled using a twin-roller machine equipped with a heating apparatus 6 to form a film 5 with a film thickness of 0.2-0.3 mm. The film 5 is baked in a high-temperature oven at 100-180°C for 6-12 h, to remove moisture. Then, the film 5 and the aluminum mesh 1 are repeatedly rolled using the roller machine 3 to form a uniform and compact positive electrode powder sheet 4, of which a thickness may be controlled at 0.3-0.55 mm, and is preferably controlled at 0.4-0.45 mm.

Further, in an example of the present application, the rolled positive electrode powder sheet and negative electrode powder sheet may be cut into a positive electrode sheet of a certain size, which is dried by atmospheric blast heating and vacuum heating. A positive electrode sheet and a negative electrode sheet for winding may be obtained.

Further, the unreasonable coating in the process of coating the electrode sheet is described:
The lithium-ion battery serves as a very typical non-aqueous secondary battery, water absorption performance of its raw materials has great influence on performances of the lithium-ion battery, such as capacity functioning and circulation, where if moisture of the electrode sheet is too high, lithium plating and an abnormal formation curve will be caused in an initial test of the lithium-ion battery, thereby resulting in a great potential safety hazard on the battery, and seriously affecting safe use of the battery.

In addition, if the moisture of the electrode sheet is too low, capacity, internal resistance, and cycle life of the battery will be affected, thereby damaging the battery performance, and
solving a problem that a potential safety hazard tends to exist because of failure to detect a compliance degree of the coating of the battery electrode sheet.

The present application provides a method for detecting a compliance of a battery electrode sheet. The concept of the present application is to compare a moisture value comprised in the electrode sheet obtained by drying with its dead weight, and determine a reasonable coating degree of each electrode sheet according to a weight ratio of the moisture value in each electrode sheet in a targeted manner, thereby avoiding a disadvantage of an abnormal moisture content of the electrode sheet caused by unreasonable coating in a process of coating the electrode sheet in a related art.

An implementation of the present application further provides a method, an apparatus, a device, and a medium for detecting a compliance of a battery electrode sheet.

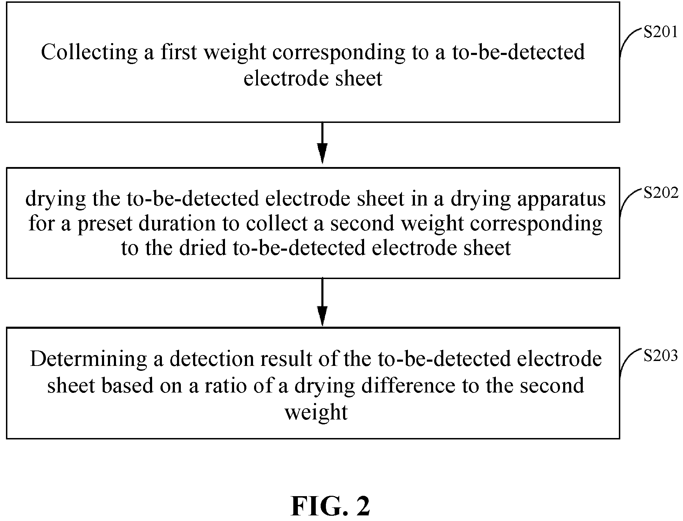

Fig. 2 schematically shows a schematic flowchart of a method for detecting a compliance of a battery electrode sheet according to an embodiment of the present application. As shown in Fig. 2, the method comprises:
S201: collecting a first weight corresponding to a to-be-detected electrode sheet.

In the present application, the to-be-detected electrode sheet is not specifically defined, for example, may be a positive electrode sheet, or may be a negative electrode sheet.

In an implementation, the number of to-be-detected electrode sheets may be one or a plural number. The first weight is a weight of the to-be-detected electrode sheet before drying.

S202: drying the to-be-detected electrode sheet in a drying apparatus for a preset duration to collect a second weight corresponding to the dried to-be-detected electrode sheet.

In an implementation, the drying apparatus is, e.g., a moisture meter, and in an example of the present application, one or more to-be-detected electrode sheets may be put into the moisture meter to start drying by starting the moisture meter.

Further, after startup, the moisture meter runs for running time set as 10 min (i.e., the preset duration), and after reaching the set running time for drying, the moisture meter can output data information, such as weight 10 g before weighing (i.e., the first weight), weight 5 g after weighing (the second weight), and the drying duration, for subsequent detection for compliance of the to-be-detected electrode sheet.

It should be noted that when there is a plurality of to-be-detected electrode sheets, both the weight before weighing and the weight after weighing obtained by the drying apparatus are total weights.

S203: determining a detection result of the to-be-detected electrode sheet based on a ratio of a drying difference to the second weight, where the drying difference is a difference between the first weight and the second weight.

It is understandable that, when a coating degree of an electrode sheet is unreasonable, no matter too heavy coating or too little coating will affect the compliance of the battery. Based on this, in the present application, a ratio of a moisture content of an electrode sheet to its own weight may be detected to infer whether there is too heavy coating or too little coating in a process of coating the electrode sheet.

Specifically, after the moisture value (i.e., the drying difference) of the to-be-detected electrode sheet is obtained in an example of present application, it is necessary to compare the moisture value with a weight of the to-be-detected electrode sheet in the present application. That is, only when a ratio of the moisture value of the electrode sheet to its own weight is determined to be within a reasonable region (i.e., the preset ratio range), will the moisture content of the electrode sheet be ascertained to be reasonable. Then, a detection result that the coating degree of the electrode sheet is reasonable is obtained.

To sum up, the technical solutions of the examples of the present application include: collecting a first weight corresponding to a to-be-detected electrode sheet; drying the to-be-detected electrode sheet in a drying apparatus for a preset duration to collect a second weight corresponding to the dried to-be-detected electrode sheet; and determining a detection result of the to-be-detected electrode sheet based on a ratio of a drying difference to the second weight, where the drying difference is a difference between the first weight and the second weight.

The technical solutions of the examples of the present application are applied to compare a moisture value comprised in the electrode sheet obtained by drying with its dead weight, and determine a reasonable coating degree of each electrode sheet according to a weight ratio of the moisture value in each electrode sheet in a targeted manner, thereby avoiding a disadvantage of an abnormal moisture content of the electrode sheet caused by unreasonable coating in a process of coating the electrode sheet in a related art.

Optionally, in another example based on the above method of the present application, before drying the to-be-detected electrode sheet in the drying apparatus for the preset duration, the method further comprises: acquiring a preset drying time association table; and selecting the preset duration matching the first weight based on the drying time association table; or determining the number of to-be-detected electrode sheets, and selecting the preset duration matching the number based on the drying time association table.

In an implementation of the present application, in order to ensure a sufficient drying degree of the to-be-detected electrode sheet, it is necessary to select a reasonable drying duration for the to-be-detected electrode sheet according to relevant attributes of the to-be-detected electrode sheet.

As an example, for example, when the to-be-detected electrode sheet is heavy, it means that the to-be-detected electrode sheet may comprise much moisture, so that a long drying duration may be selected for the to-be-detected electrode sheet. As another example, for example, when the number of to-be-detected electrode sheets is large, it means that a degree of to-be-dried moisture is high, so that a long drying duration may be selected for the to-be-detected electrode sheet.

The technical solutions of the examples of the present application are applied to select reasonable drying durations for different weights or different numbers of electrode sheets according to preset association information in a targeted manner, thereby ensuring that moisture comprised in the electrode sheet is completely dried, and then achieving the purpose of subsequently determining the reasonable coating degree of each electrode sheet according to the weight ratio of the moisture value in each electrode sheet in a targeted manner.

Optionally, in another example based on the above method of the present application, the determining the detection result of the to-be-detected electrode sheet based on the ratio of the drying difference to the second weight comprises: determining a material attribute of the to-be-detected electrode sheet, and selecting a preset ratio range matching the material attribute; and determining the detection result of the to-be-detected electrode sheet based on a size relationship between the ratio of the drying difference to the second weight and the preset ratio range.

Further, the selection of the preset ratio range is crucial for the detection result of the electrode sheet. It is understandable that electrode sheets with different material attributes may present different corresponding performances, and therefore, various types of electrode sheets have different reasonable moisture contents accordingly,
thereby avoiding a disadvantage of failure to determine whether coating degrees of the electrode sheets with different material attributes are reasonable in a targeted manner due to setting of a unified preset ratio range. In an example of the present application, it is necessary to select a preset ratio range matching an electrode sheet with each material attribute.

As an example, for example, in an example of the present application, a preset ratio range of 5%-8% may be selected for an electrode sheet with graphite material attributes. In an example of the present application, a preset ratio range of 3%-5% may be selected for an electrode sheet with cobalt material attributes.

The technical solutions of the examples of the present application are applied to select reasonable ratios for electrode sheets with different material attributes according to the preset association information in a targeted manner, thereby achieving the purpose of subsequently determining the reasonable coating degree of each electrode sheet according to the weight ratio of the moisture value in each electrode sheet in a targeted manner.

Optionally, in another example based on the above method of the present application, the determining the material attribute of the to-be-detected electrode sheet, and selecting the preset ratio range matching the material attribute comprise: determining historical storage information of the to-be-detected electrode sheet, wherein the historical storage information comprises a historical storage environment and a historical storage duration; and selecting the preset ratio range matching the material attribute based on the historical storage information.

Similarly, in order to ensure reasonable selection of the preset ratio range, in an example of the present application, it is further necessary to ascertain the historical storage information of the battery electrode sheet. It is understandable that, for a same electrode sheet, both different storage environments (such as storage in a wet, shady, and cool environment and storage in a warm and dry environment) and different historical storage durations will affect the moisture comprised in the electrode sheet,
thereby avoiding a disadvantage of failure to determine whether coating degrees of the electrode sheet in different storage states are reasonable in a targeted manner due to setting of a unified preset ratio range. In an example of the present application, it is necessary to select the preset ratio range matching the historical storage environment and the historical storage duration of the electrode sheet with each material attribute.

In an implementation of the present application, a historical period of the historical storage information is not limited, for example, historical storage information in a historical week or historical storage information on a historical day,
which is critical for the detection result of the electrode sheet. It is understandable that electrode sheets with different material attributes may present different corresponding performances, and therefore, various types of electrode sheets have different reasonable moisture contents accordingly,

The technical solutions of the examples of the present application are applied to select reasonable ratios for electrode sheets with different material attributes in different storage environments for different storage durations according to the preset association information in a targeted manner, thereby avoiding failure to accurately ascertain a reasonable degree of reasonable coating of the electrode sheet due to unreasonable selection of the ratio.

After the selecting the preset ratio range matching the material attribute, the method further comprises: determining that the detection result of the to-be-detected electrode sheet is compliant when detecting that the ratio of the drying difference to the second weight is within the preset ratio range; and determining that the detection result of the to-be-detected electrode sheet is not compliant when detecting that the ratio of the drying difference to the second weight is beyond the preset ratio range.

It is understandable that, if the ratio of the moisture value of the electrode sheet to its dead weight is detected to be within a reasonable range (the preset ratio range), the coating degree of the electrode sheet is determined to be reasonable, and then the resulting detection result of the to-be-detected electrode sheet is a compliant result.

Further, if the ratio of the moisture value of the electrode sheet to its dead weight is detected to be higher than the reasonable range (the preset ratio range), the moisture value comprised in the electrode sheet is determined to be too high, then the coating degree of the electrode sheet is determined to be too heavy, and then the resulting detection result of the to-be-detected electrode sheet is a not compliant result.

In addition, if the ratio of the moisture value of the electrode sheet to its dead weight is detected to be lower than the reasonable range (the preset ratio range), the moisture value comprised in the electrode sheet is determined to be too low, then the coating degree of the electrode sheet is determined to be too light, and then the resulting detection result of the to-be-detected electrode sheet is a not compliant result.

The technical solutions of the examples of the present application are applied to compare the moisture value comprised in the electrode sheet obtained by drying with its dead weight, and conclude that the detection result is not compliant only when determining that a ratio of the moisture value to a total weight of each electrode sheet is small, thereby not only avoiding a disadvantage of a high moisture content of the electrode sheet caused by too heavy coating in the process of coating the electrode sheet in a related art, but also avoiding a problem of affecting the battery performance due to too little coating in the process of coating the electrode sheet.

Optionally, in another example based on the above method of the present application, after collecting the first weight corresponding to the to-be-detected electrode sheet, the method further comprises: determining whether the first weight corresponding to the to-be-detected electrode sheet is within a preset weight range; and drying the to-be-detected electrode sheet in the drying apparatus for the preset duration when the first weight corresponding to the to-be-detected electrode sheet is within the preset weight range.

In an implementation of the present application, the weight of the electrode sheet may be first detected. It is understandable that, if the to-be-detected electrode sheet is detected to be too heavy or too light, a result that the coating degree of the electrode sheet is unreasonable can be obtained. Further, it is not necessary to start a subsequent step of detecting a moisture content.

In an implementation of an example of the present application, the first weight corresponding to the to-be-detected electrode sheet can be obtained using a weighing apparatus. As an example, for example, the weighing apparatus is an electronic scale.

In an implementation, the electronic scale is connected to a serial port of a computer by hardware connection through a RS-232C cable, serial communication parameters corresponding to serial port parameter configurations of the computer are manually set on the electronic scale, and the electronic scale establishes a serial communication connection with the computer through a windows function.

Whenever a to-be-weighed to-be-detected electrode sheet is placed, the electronic scale will automatically detect whether the weighing is stable, and after the weighing is stable, the electronic scale will automatically send weight data to the computer in a certain specification format. After detecting the data sent from the electronic scale, the computer automatically collects the data, analyzes the data, automatically collects the corresponding number of weighed electrode sheets according to process requirements for collection, and then uploads the weight data according to MES requirements.

The technical solutions of the examples of the present application are applied to first detect a weight of the electrode sheet before detecting the moisture content of the electrode sheet, preliminarily ascertain that the coating degree of the electrode sheet is reasonable only when the electrode sheet is determined to be within the preset weight range, and subsequently start a step of detecting the moisture content of the electrode sheet.

Optionally, in another example based on the above method of the present application, after the determining the detection result of the to-be-detected electrode sheet based on the ratio of the drying difference to the second weight, the method further comprises: establishing a mapping relationship between the to-be-detected electrode sheet, the corresponding detection result, and a corresponding separator identifier; and storing the mapping relationship in a preset storage area; and receiving a collection instruction sent from a battery detection system, extracting the mapping relationship from the storage area, and sending the mapping relationship to the battery detection system. The technical solutions of the examples of the present application are applied to automatically store a relationship between a detection result of each electrode sheet and a separator of the electrode sheet, to facilitate subsequent retrieval at any moment when query is required.

Optionally, in another example based on the above method of the present application, before the collecting the first weight corresponding to the to-be-detected electrode sheet, the method further comprises: acquiring an electrode sheet image corresponding to the to-be-detected electrode sheet, and inputting the electrode sheet image into an image detection model; recognizing a color feature and a brightness feature corresponding to the electrode sheet image using the image detection model; and drying the to-be-detected electrode sheet in the drying apparatus for the preset duration when detecting that the color feature and the brightness feature satisfy a preset condition.

In an implementation of an example of the present application, the coating degree of the to-be-detected electrode sheet may be further preliminarily ascertained by image detection. It is understandable that both a color and a brightness on a surface of the electrode sheet will change after the electrode sheet is coated. Further, either too high or too low coating degree will cause the color and the brightness on the surface of the electrode sheet to be different from the color and the brightness on the surface of the electrode sheet when the coating degree is uniform and reasonable.

Based on this, an example of the present application can recognize whether the color feature corresponding to the electrode sheet image satisfies a certain color condition and whether the brightness feature satisfies a certain brightness condition (the color condition and the brightness condition are the preset condition) using the preset image detection model, thereby determining whether the coating degree of the electrode sheet is reasonable.

In an implementation of the present application, the image detection model is not specifically defined, for example, may be a convolutional neural network (CNN). The convolutional neural network is a category of feedforward neural network including convolutional computation and having a deep structure, and is one of the representative algorithms of deep learning. The convolutional neural network has a representation learning ability, and can perform translation-invariant classification on inputted information according to its hierarchical structure. Thanks to a powerful feature representation ability on images, the CNN (convolutional neural network) has achieved remarkable effects in the fields, such as image classification, target detection, and semantic segmentation.

Further, in the present application, the feature information (the color feature and the brightness feature) in the electrode sheet image may be detected using the CNN (convolutional neural network) model, thus realizing feature recognition on the electrode sheet image, and determining a reasonable coating degree of the electrode sheet. It is necessary to input the electrode sheet image into a preset convolutional neural network model, and use an output from a last fully connected layer (FC layer) of the convolutional neural network model as a recognition result of feature data corresponding to the electrode sheet image.

The technical solutions of the examples of the present application are applied to first detect a color and a brightness of the electrode sheet image before detecting the moisture content of the electrode sheet, and preliminarily ascertain whether the coating degree of the electrode sheet is reasonable by comparing the color and the brightness with the preset condition, thus determining whether to subsequently start the step of detecting the moisture content of the electrode sheet.

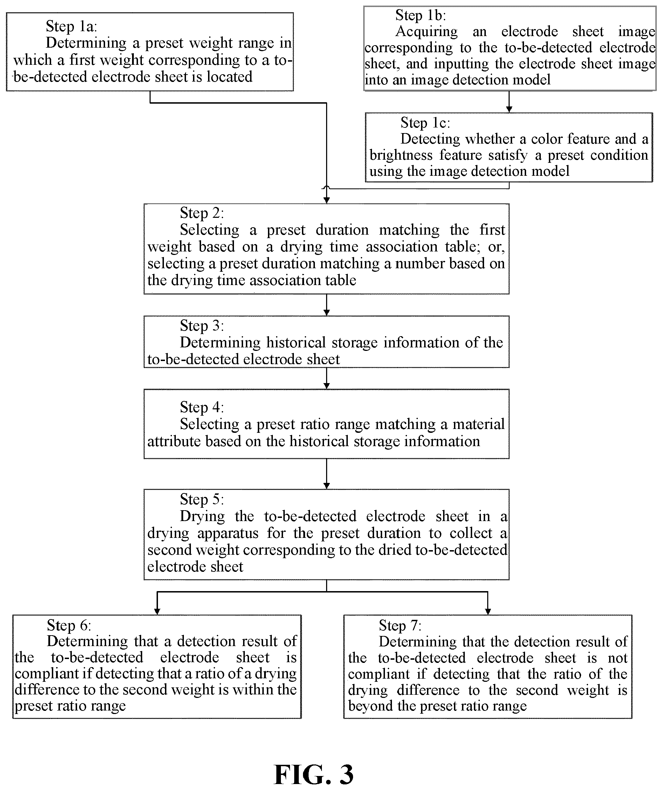

As an example, the method for detecting a compliance of a battery electrode sheet presented in the present application is specifically described with reference to Fig. 3:
Step 1a: determining a preset weight range in which a first weight corresponding to a to-be-detected electrode sheet is located. Then, step 2 is entered.
Step 1b: acquiring an electrode sheet image corresponding to the to-be-detected electrode sheet, and inputting the electrode sheet image into an image detection model. Then, step 1c is entered.

Step 1a and step 1b may be executed in parallel or may be executed in sequence regardless of order.

Step 1c: detecting whether a color feature and a brightness feature satisfy a preset condition using the image detection model.

Step 2: selecting a preset duration matching the first weight based on a drying time association table; or selecting a preset duration matching a number based on the drying time association table.

Step 3: determining historical storage information of the to-be-detected electrode sheet.

The historical storage information includes a historical storage environment and a historical storage duration.

Step 4: selecting a preset ratio range matching a material attribute based on the historical storage information.

Step 5: drying the to-be-detected electrode sheet in a drying apparatus for the preset duration to collect a second weight corresponding to the dried to-be-detected electrode sheet. Then, step 6 or step 7 is entered.

Step 6: determining that a detection result of the to-be-detected electrode sheet is compliant when detecting that a ratio of a drying difference to the second weight is within the preset ratio range.

Step 7: determining that the detection result of the to-be-detected electrode sheet is not compliant when detecting that the ratio of the drying difference to the second weight is beyond the preset ratio range.

The technical solutions of the examples of the present application are applied to compare a moisture value comprised in the electrode sheet obtained by drying with its dead weight, and determine a reasonable coating degree of each electrode sheet according to a weight ratio of the moisture value in each electrode sheet in a targeted manner, thereby avoiding a disadvantage of an abnormal moisture content of the electrode sheet caused by unreasonable coating in a process of coating the electrode sheet in a related art.

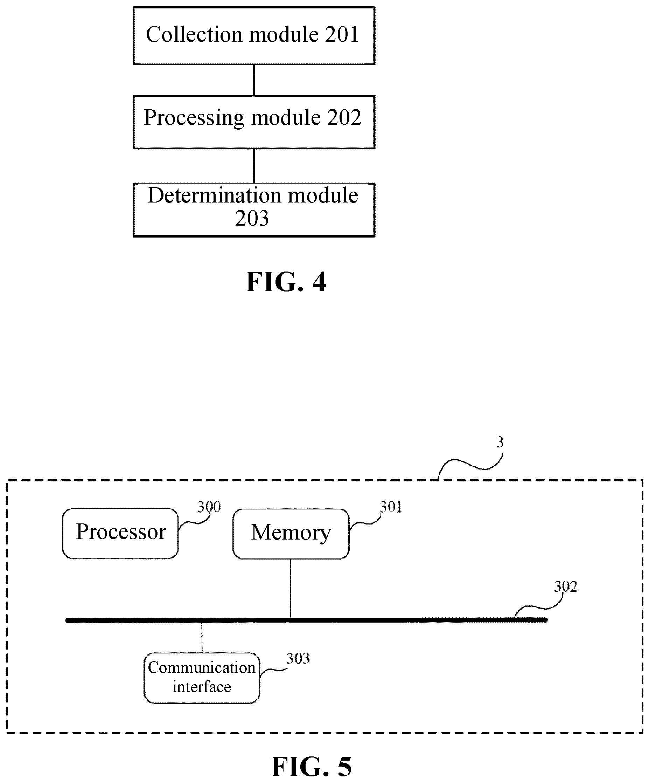

Optionally, in another embodiment of the present application, as shown in Fig. 4, the present application further provides an apparatus for detecting a compliance of a battery electrode sheet, comprising:
a collection module 201 configured to collect a first weight corresponding to a to-be-detected electrode sheet;
a processing module 202 configured to dry the to-be-detected electrode sheet in a drying apparatus for a preset duration to collect a second weight corresponding to the dried to-be-detected electrode sheet; and
a determination module 203 configured to determine a detection result of the to-be-detected electrode sheet based on a ratio of a drying difference to the second weight, where the drying difference is a difference between the first weight and the second weight.

The technical solutions of the examples of the present application are applied to compare a moisture value comprised in the electrode sheet obtained by drying with its dead weight, and determine a reasonable coating degree of each electrode sheet according to a weight ratio of the moisture value in each electrode sheet in a targeted manner, thereby avoiding a disadvantage of an abnormal moisture content of the electrode sheet caused by unreasonable coating in a process of coating the electrode sheet in a related art.

In another embodiment of the present application, the processing module 202 is configured to:
acquire a preset drying time association table; and
select the preset duration matching the first weight based on the drying time association table; or determine the number of to-be-detected electrode sheets, and select the preset duration matching the number based on the drying time association table.

In another embodiment of the present application, the processing module 202 is configured to:
determine a material attribute of the to-be-detected electrode sheet, and select a preset ratio range matching the material attribute; and
determine the detection result of the to-be-detected electrode sheet based on a size relationship between the ratio of the drying difference to the second weight and the preset ratio range.

In another embodiment of the present application, the processing module 202 is configured to:
determine historical storage information of the to-be-detected electrode sheet, wherein the historical storage information comprises a historical storage environment and a historical storage duration; and
select the preset ratio range matching the material attribute based on the historical storage information.

In another embodiment of the present application, the processing module 202 is configured to:
determine that the detection result of the to-be-detected electrode sheet is compliant when detecting that the ratio of the drying difference to the second weight is within the preset ratio range; and
determine that the detection result of the to-be-detected electrode sheet is not compliant when detecting that the ratio of the drying difference to the second weight is beyond the preset ratio range.

In another embodiment of the present application, the processing module 202 is configured to:
determine whether the first weight corresponding to the to-be-detected electrode sheet is within a preset weight range; and
dry the to-be-detected electrode sheet in the drying apparatus for the preset duration when the first weight corresponding to the to-be-detected electrode sheet is within the preset weight range.

In another embodiment of the present application, the processing module 202 is configured to:
acquire an electrode sheet image corresponding to the to-be-detected electrode sheet, and input the electrode sheet image into an image detection model;
recognize a color feature and a brightness feature corresponding to the electrode sheet image using the image detection model; and
dry the to-be-detected electrode sheet in the drying apparatus for the preset duration when detecting that the color feature and the brightness feature satisfy a preset condition.

An embodiment of the present application further provides an electronic device, to execute the above method for detecting a compliance of a battery electrode sheet. Referring to Fig. 5, a schematic diagram of an electronic device provided in some embodiments of the present application is shown. As shown in Fig. 5, the electronic device 3 includes: a processor 300, a memory 301, a bus 302, and a communication interface 303, where the processor 300, the communication interface 303, and the memory 301 are connected through the bus 302; the memory 301 stores a computer program runnable on the processor 300, and the processor 300 executes, when running the computer program, the method for detecting a compliance of a battery electrode sheet provided in any one of the above embodiments of the present application.

The memory 301 may include a high-speed random access memory (RAM), and may further include a non-volatile memory, e.g., at least one disk memory. A communication connection between the apparatus network element and at least one other network element may be implemented through at least one communication interface 303 (either wired or wireless) using the Internet, a wide area network, a local network, a metropolitan area network, or the like.

The bus 302 may be an ISA bus, a PCI bus, an EISA bus, or the like. The bus may be divided into an address bus, a data bus, a control bus, etc. The memory 301 is configured to store a program, the processor 300 executes the program after receiving an execution instruction, and a method for data recognition disclosed in any one embodiment of the above examples of the present application may be applied to the processor 300 or implemented by the processor 300.

The processor 300 may be an integrated circuit chip with a signal processing capability. In an implementation process, steps of the above method may be completed by an integrated logic circuit of hardware in the processor 300 or instructions in the form of software. The above processor 300 may be a general-purpose processor, including a processor (Central Processing Unit, abbreviated as CPU), a network processor (abbreviated as NP), etc., or may be a digital signal processor (DSP), an application specific integrated circuit (ASIC), a field programmable gate array (FPGA) or other programmable logic devices, a discrete gate or transistor logic device, or a discrete hardware component, an. can implement or execute the methods, steps, and logical block diagrams disclosed in examples of the present application.

The general-purpose processor may be a microprocessor or the processor may also be any conventional processor or the like. The steps of the method disclosed in the examples of the present application may be directly embodied as being executed and completed by a hardware decoding processor, or being executed and completed by a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory 301. The processor 300 reads information from the memory 301, and completes the steps of the above method in combination with its hardware.

The electronic device provided in the examples of the present application is derived from a same inventive concept as the method for detecting a compliance of a battery electrode sheet provided in the examples of the present application, and has same beneficial effects as the method adopted, operated, or implemented thereof.

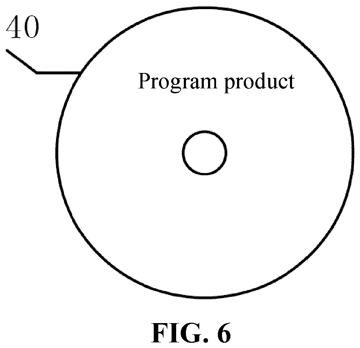

An embodiment of the present application further provides a computer-readable storage medium corresponding to the method for detecting a compliance of a battery electrode sheet provided in the above embodiments. Referring to Fig. 6, a computer-readable storage medium shown therein is an optical disk 40 storing a computer program (i.e., program product) thereon. When executed by a processor, the computer program, will implement the method for detecting a compliance of a battery electrode sheet provided in any one of the above embodiments.

It should be noted that examples of the computer-readable storage medium may further comprise, but are not limited to, a phase-change random-access memory (PRAM), a static random-access memory (SRAM), a dynamic random-access memory (DRAM), a random-access memory (RAM) of other type, a read-only memory (ROM), an electrically erasable programmable read-only memory (EEPROM), a flash RAM or other optical or magnetic storage mediums, which will not be detailed one by one here.

The computer-readable storage medium provided in the above examples of the present application is derived from a same inventive concept as the method for data recognition provided in the examples of the present application, and has same beneficial effects as the method adopted, operated, or implemented in an application stored therein.

It should be noted that:
in the specification provided here, many specific details are described. However, it can be understood that the examples of the present application may be practiced without these specific details. In some examples, well-known structures and techniques are not shown in detail, so as not to obscure understanding of the present specification.

Similarly, it should be understood that, in the above description of exemplary examples of the present application, various features of the present application are sometimes grouped together in a single example, figure, or description thereof, for the purpose of streamlining the present application and aiding in the understanding of one or more of various inventive aspects. However, the method of the disclosure should not be interpreted as reflecting an intention that the present claimed application claims more features than are explicitly recited in each claim. Rather, as the following claims reflect, inventive aspects are less than all features of a single example disclosed above. Thus, the claims following the Detailed Description are explicitly incorporated into the Detailed Description, with each claim standing on its own as a separate example of the present application.

Furthermore, while some examples described herein include some but not other features included in other examples, combinations of features of different examples are meant to be within the scope of the present application, and form different examples, as would be understood by those skilled in the art. While the above description merely provides preferred specific embodiments of the present application, the scope of protection of the present application is not limited to the preferred specific embodiments. The scope of protection of the present application is determined by the scope of protection of the appended claims.

## Claims

1. A method for detecting a compliance of a battery electrode sheet, comprising:
collecting (S201), by a collection module (201), a first weight corresponding to at least one to-be-detected electrode sheet;
drying (S202), by a processing module (202), the to-be-detected electrode sheet in a drying apparatus for a preset duration to collect a second weight corresponding to the dried to-be-detected electrode sheet; and
determining (S203), by a determination module (203), a detection result of the to-be-detected electrode sheet,
**characterized in that**:
the determining (S203), by a determination module (203), a detection result of the to-be-detected electrode sheet is based on a ratio of a drying difference to the second weight, wherein the drying difference is a difference between the first weight and the second weight;
wherein determining (S203) the detection result of the to-be-detected electrode sheet based on the ratio of the drying difference to the second weight comprises:
determining a material attribute of the to-be-detected electrode sheet, and selecting a preset ratio range matching the material attribute; and
determining the detection result of the to-be-detected electrode sheet based on a size relationship between the ratio of the drying difference to the second weight and the preset ratio range;
wherein determining the material attribute of the to-be-detected electrode sheet, and selecting the preset ratio range matching the material attribute comprises:
determining historical storage information of the to-be-detected electrode sheet, wherein the historical storage information comprises a historical storage environment and a historical storage duration; and
selecting the preset ratio range matching the material attribute based on the historical storage information.
wherein after the selecting the preset ratio range matching the material attribute, the method further comprises:
determining that the detection result of the to-be-detected electrode sheet is compliant when detecting that the ratio of the drying difference to the second weight is within the preset ratio range; and
determining that the detection result of the to-be-detected electrode sheet is not compliant when detecting that the ratio of the drying difference to the second weight is beyond the preset ratio range.

2. The method according to claim 1, wherein before drying (S202) the to-be-detected electrode sheet in the drying apparatus for the preset duration, the method further comprises:
acquiring a preset drying time association table; and
selecting the preset duration matching the first weight based on the drying time association table; or determining a number of the at least one to-be-detected electrode sheet, and selecting the preset duration matching the number based on the drying time association table.

3. The method according to claim 1, wherein after collecting (S201) the first weight corresponding to the to-be-detected electrode sheet, the method further comprises:
determining whether the first weight corresponding to the to-be-detected electrode sheet is within a preset weight range; and
drying the to-be-detected electrode sheet in the drying apparatus for the preset duration when the first weight corresponding to the to-be-detected electrode sheet is within the preset weight range.

4. The method according to any one of claims 1-2, wherein before the collecting (S201) the first weight corresponding to the to-be-detected electrode sheet, the method further comprises:
acquiring an electrode sheet image corresponding to the to-be-detected electrode sheet, and inputting the electrode sheet image into an image detection model;
recognizing a color feature and a brightness feature corresponding to the electrode sheet image using the image detection model; and
drying the to-be-detected electrode sheet in the drying apparatus for the preset duration when detecting that the color feature and the brightness feature satisfy a preset condition.

5. The method according to any one of claims 1-4, wherein after the determining (S203) the detection result of the to-be-detected electrode sheet based on the ratio of the drying difference to the second weight, the method further comprises:
establishing a mapping relationship between the to-be-detected electrode sheet, the corresponding detection result, and a corresponding separator identifier; and storing the mapping relationship in a preset storage area; and
receiving a collection instruction sent from a battery detection system, extracting the mapping relationship from the storage area, and sending the mapping relationship to the battery detection system.

6. An apparatus for detecting a compliance of a battery electrode sheet, comprising:
a collection module (201) configured to collect a first weight corresponding to at least one to-be-detected electrode sheet;
a processing module (202) configured to dry the to-be-detected electrode sheet in a drying apparatus for a preset duration to collect a second weight corresponding to the dried to-be-detected electrode sheet; and
a determination module (203) configured to determine a detection result of the to-be-detected electrode sheet, **characterized in that**:
the determination module (203) is configured to determine a detection result of the to-be-detected electrode sheet based on a ratio of a drying difference to the second weight, wherein the drying difference is a difference between the first weight and the second weight;
the processing module (202) is configured to:
determine a material attribute of the to-be-detected electrode sheet, and select a preset ratio range matching the material attribute; and
determine the detection result of the to-be-detected electrode sheet based on a size relationship between the ratio of the drying difference to the second weight and the preset ratio range;
the processing module (202) is configured to:
determine historical storage information of the to-be-detected electrode sheet, wherein the historical storage information comprises a historical storage environment and a historical storage duration; and
select the preset ratio range matching the material attribute based on the historical storage information;
determine that the detection result of the to-be-detected electrode sheet is compliant when detecting that the ratio of the drying difference to the second weight is within the preset ratio range; and
determine that the detection result of the to-be-detected electrode sheet is not compliant when detecting that the ratio of the drying difference to the second weight is beyond the preset ratio range.

7. A computer-readable storage medium, configured to store computer-readable instructions, wherein the instructions, when executed, execute operations of the method for detecting a compliance of a battery electrode sheet according to any one of claims 1-5.

## Patentansprüche

1. Verfahren zum Erkennen einer Richtlinienkonformität einer Batterieelektrodenfolie, umfassend:
Erfassen (S201), durch ein Erfassungsmodul (201), eines mindestens einer zu erkennenden Elektrodenfolie entsprechenden ersten Gewichts;
Trocknen (S202), durch ein Bearbeitungsmodul (202), der zu erkennenden Elektrodenfolie in einer Trockeneinrichtung für eine voreingestellte Dauer, um ein der getrockneten zu erkennenden Elektrodenfolie entsprechendes zweites Gewicht zu erfassen; und
Bestimmen (S203), durch ein Bestimmungsmodul (203), eines Erkennungsergebnisses für die zu erkennende Elektrodenfolie,
**dadurch gekennzeichnet, dass**:
das Bestimmen (S203), durch ein Bestimmungsmodul (203), eines Erkennungsergebnisses für die zu erkennende Elektrodenfolie auf einem Verhältnis einer Trocknungsdifferenz zum zweiten Gewicht basiert, wobei die Trocknungsdifferenz eine Differenz zwischen dem ersten Gewicht und dem zweiten Gewicht ist;
wobei Bestimmen (S203) des Erkennungsergebnisses für die zu erkennende Elektrodenfolie auf der Basis des Verhältnisses der Trocknungsdifferenz zum zweiten Gewicht Folgendes umfasst:
Bestimmen eines Materialattributs der zu erkennenden Elektrodenfolie und Auswählen eines voreingestellten Verhältnisbereichs passend zum Materialattribut; und
Bestimmen des Erkennungsergebnisses für die zu erkennende Elektrodenfolie auf der Basis einer Größenbeziehung zwischen dem Verhältnis der Trocknungsdifferenz zum zweiten Gewicht und dem voreingestellten Verhältnisbereich;
wobei Bestimmen des Materialattributs der zu erkennenden Elektrodenfolie und Auswählen des voreingestellten Verhältnisbereichs passend zum Materialattribut Folgendes umfasst:
Bestimmen historischer Speicherinformation der zu erkennenden Elektrodenfolie, wobei die historische Speicherinformation eine historische Speicherumgebung und eine historische Speicherdauer umfasst; und
Auswählen des voreingestellten Verhältnisbereichs passend zum Materialattribut auf der Basis der historischen Speicherinformation;
wobei nach dem Auswählen des voreingestellten Verhältnisbereichs passend zum Materialattribut das Verfahren ferner Folgendes umfasst:
Bestimmen, dass das Erkennungsergebnis für die zu erkennende Elektrodenfolie richtlinienkonform ist, wenn erkannt wird, dass das Verhältnis der Trocknungsdifferenz zum zweiten Gewicht innerhalb des voreingestellten Verhältnisbereichs liegt; und
Bestimmen, dass das Erkennungsergebnis für die zu erkennende Elektrodenfolie nicht richtlinienkonform ist, wenn erkannt wird, dass das Verhältnis der Trocknungsdifferenz zum zweiten Gewicht jenseits des voreingestellten Verhältnisbereichs liegt.

2. Verfahren nach Anspruch 1, wobei vor dem Trocknen (S202) der zu erkennenden Elektrodenfolie in der Trockeneinrichtung für die voreingestellte Dauer das Verfahren ferner Folgendes umfasst:
Aufnehmen einer Zuordnungstabelle für voreingestellte Trockenzeiten; und
Auswählen der voreingestellten Dauer passend zum ersten Gewicht auf der Basis der Zuordnungstabelle für Trockenzeiten; oder Bestimmen einer Anzahl der mindestens einen zu erkennenden Elektrodenfolie und Auswählen der voreingestellten Dauer passend zu der Anzahl auf der Basis der Zuordnungstabelle für Trockenzeiten.

3. Verfahren nach Anspruch 1, wobei nach dem Erfassen (S201) des der zu erkennenden Elektrodenfolie entsprechenden ersten Gewichts das Verfahren ferner Folgendes umfasst:
Bestimmen, ob das der zu erkennenden Elektrodenfolie entsprechende erste Gewicht innerhalb eines voreingestellten Gewichtsbereichs liegt; und
Trocknen der zu erkennenden Elektrodenfolie in der Trockeneinrichtung für die voreingestellte Dauer, wenn das der zu erkennenden Elektrodenfolie entsprechende erste Gewicht innerhalb des voreingestellten Gewichtsbereichs liegt.

4. Verfahren nach einem der Ansprüche 1-2, wobei vor dem Erfassen (S201) des der zu erkennenden Elektrodenfolie entsprechenden ersten Gewichts das Verfahren ferner Folgendes umfasst:
Aufnehmen eines der zu erkennenden Elektrodenfolie entsprechenden Elektrodenfolienbildes und Eingeben des Elektrodenfolienbildes in ein Bilderkennungsmodell;
Identifizieren eines Farbmerkmals und eines Helligkeitsmerkmals, die dem Elektrodenfolienbild entsprechen, unter Verwendung des Bilderkennungsmodells; und
Trocknen der zu erkennenden Elektrodenfolie in der Trockeneinrichtung für die voreingestellte Dauer, wenn erkannt wird, dass das Farbmerkmal und das Helligkeitsmerkmal einer voreingestellten Bedingung genügen.

5. Verfahren nach einem der Ansprüche 1-4, wobei nach dem Bestimmen (S203) des Erkennungsergebnisses für die zu erkennende Elektrodenfolie auf der Basis des Verhältnisses der Trocknungsdifferenz zum zweiten Gewicht das Verfahren ferner Folgendes umfasst:
Aufsetzen einer Abbildungsbeziehung zwischen der zu erkennenden Elektrodenfolie, dem entsprechenden Erkennungsergebnis und einer entsprechenden Separatoridentifikation; und Speichern der Abbildungsbeziehung in einem voreingestellten Speicherbereich; und
Empfangen einer von einem Batterieerkennungssystem gesendeten Erfassungsinstruktion, Extrahieren der Abbildungsbeziehung aus dem Speicherbereich und Senden der Abbildungsbeziehung an das Batterieerkennungssystem.

6. Einrichtung zum Erkennen einer Richtlinienkonformität einer Batterieelektrodenfolie, umfassend:
ein Erfassungsmodul (201) konfiguriert zum Erfassen eines mindestens einer zu erkennenden Elektrodenfolie entsprechenden ersten Gewichts;
ein Bearbeitungsmodul (202) konfiguriert zum Trocknen der zu erkennenden Elektrodenfolie in einer Trockeneinrichtung für eine voreingestellte Dauer, um ein der getrockneten zu erkennenden Elektrodenfolie entsprechendes zweites Gewicht zu erfassen; und
ein Bestimmungsmodul (203) konfiguriert zum Bestimmen eines Erkennungsergebnisses für die zu erkennende Elektrodenfolie, **dadurch gekennzeichnet, dass**
das Bestimmungsmodul (203) zum Bestimmen eines Erkennungsergebnisses für die zu erkennende Elektrodenfolie auf der Basis eines Verhältnisses einer Trocknungsdifferenz zum zweiten Gewicht konfiguriert ist, wobei die Trocknungsdifferenz eine Differenz zwischen dem ersten Gewicht und dem zweiten Gewicht ist;
das Bearbeitungsmodul (202) zu Folgendem konfiguriert ist:
Bestimmen eines Materialattributs der zu erkennenden Elektrodenfolie und Auswählen eines voreingestellten Verhältnisbereichs passend zum Materialattribut; und
Bestimmen des Erkennungsergebnisses für die zu erkennende Elektrodenfolie auf der Basis einer Größenbeziehung zwischen dem Verhältnis der Trocknungsdifferenz zum zweiten Gewicht und dem voreingestellten Verhältnisbereich;
das Bearbeitungsmodul (202) zu Folgendem konfiguriert ist:
Bestimmen historischer Speicherinformation der zu erkennenden Elektrodenfolie, wobei die historische Speicherinformation eine historische Speicherumgebung und eine historische Speicherdauer umfasst; und
Auswählen des voreingestellten Verhältnisbereichs passend zum Materialattribut auf der Basis der historischen Speicherinformation;
Bestimmen, dass das Erkennungsergebnis für die zu erkennende Elektrodenfolie richtlinienkonform ist, wenn erkannt wird, dass das Verhältnis der Trocknungsdifferenz zum zweiten Gewicht innerhalb des voreingestellten Verhältnisbereichs liegt; und
Bestimmen, dass das Erkennungsergebnis für die zu erkennende Elektrodenfolie nicht richtlinienkonform ist, wenn erkannt wird, dass das Verhältnis der Trocknungsdifferenz zum zweiten Gewicht jenseits des voreingestellten Verhältnisbereichs liegt.

7. Computerlesbares Speichermedium konfiguriert zum Speichern von computerlesbaren Instruktionen, wobei die Instruktionen bei Ausführung Operationen des Verfahrens zum Erkennen einer Richtlinienkonformität einer Batterieelektrodenfolie gemäß einem der Ansprüche 1-5 ausführen.

## Revendications

1. Procédé de détection d'une conformité d'une feuille d'électrode de batterie, comprenant les étapes consistant à :
collecter (S201), par un module de collecte (201), un premier poids correspondant à au moins une feuille d'électrode à détecter ;
sécher (S202), par un module de traitement (202), la feuille d'électrode à détecter dans un appareil de séchage pendant une durée prédéfinie pour collecter un second poids correspondant à la feuille d'électrode à détecter séchée ; et
déterminer (S203), par un module de détermination (203), un résultat de détection de la feuille d'électrode à détecter,
le procédé étant **caractérisé en ce que** :
la détermination (S203), par un module de détermination (203), d'un résultat de détection de la feuille d'électrode à détecter est basée sur un rapport entre une différence de séchage et le second poids, la différence de séchage étant une différence entre le premier poids et le second poids ;
la détermination (S203) du résultat de détection de la feuille d'électrode à détecter sur la base du rapport entre la différence de séchage et le second poids comprenant les étapes consistant à :
déterminer un attribut de matériau de la feuille d'électrode à détecter et sélectionner une plage de rapports prédéfinie correspondant à l'attribut de matériau ; et
déterminer le résultat de détection de la feuille d'électrode à détecter sur la base d'une relation de taille entre le rapport entre la différence de séchage et le second poids et la plage de rapports prédéfinie ;
la détermination de l'attribut de matériau de la feuille d'électrode à détecter et la sélection de la plage de rapports prédéfinie correspondant à l'attribut de matériau comprenant les étapes consistant à :
déterminer des informations historiques de stockage de la feuille d'électrode à détecter, les informations historiques de stockage comprenant un environnement historique de stockage et une durée historique de stockage ; et
sélectionner la plage de rapports prédéfinie correspondant à l'attribut de matériau sur la base des informations historiques de stockage,
après la sélection de la plage de rapports prédéfinie correspondant à l'attribut de matériau, le procédé comprenant en outre les étapes consistant à :
déterminer que le résultat de détection de la feuille d'électrode à détecter est conforme lorsqu'il est détecté que le rapport entre la différence de séchage et le second poids est dans les limites de la plage de rapports prédéfinie ; et
déterminer que le résultat de détection de la feuille d'électrode à détecter n'est pas conforme lorsqu'il est détecté que le rapport entre la différence de séchage et le second poids est au-delà de la plage de rapports prédéfinie.

2. Procédé selon la revendication 1, le procédé comprenant en outre, avant le séchage (S202) de la feuille d'électrode à détecter dans l'appareil de séchage pendant la durée prédéfinie, les étapes consistant à :
acquérir une table d'association de temps de séchage prédéfinis ; et
sélectionner la durée prédéfinie correspondant au premier poids sur la base de la table d'association de temps de séchage ; ou déterminer un nombre de l'au moins une feuille d'électrode à détecter et sélectionner la durée prédéfinie correspondant au nombre sur la base de la table d'association de temps de séchage.

3. Procédé selon la revendication 1, le procédé comprenant en outre, après la collecte (S201) du premier poids correspondant à la feuille d'électrode à détecter, les étapes consistant à :
déterminer si le premier poids correspondant à la feuille d'électrode à détecter est dans les limites d'une plage de poids prédéfinie ; et
sécher la feuille d'électrode à détecter dans l'appareil de séchage pendant la durée prédéfinie lorsque le premier poids correspondant à la feuille d'électrode à détecter est dans les limites de la plage de poids prédéfinie.

4. Procédé selon l'une quelconque des revendications 1 à 2, le procédé comprenant en outre, avant la collecte (S201) du premier poids correspondant à la feuille d'électrode à détecter, les étapes consistant à :
acquérir une image de feuille d'électrode correspondant à la feuille d'électrode à détecter et entrer l'image de feuille d'électrode dans un modèle de détection d'image ;
reconnaître une caractéristique de couleur et une caractéristique de luminosité correspondant à l'image de feuille d'électrode au moyen du modèle de détection d'image ; et
sécher la feuille d'électrode à détecter dans l'appareil de séchage pendant la durée prédéfinie lorsqu'il est détecté que la caractéristique de couleur et la caractéristique de luminosité satisfont à une condition prédéfinie.

5. Procédé selon l'une quelconque des revendications 1 à 4, le procédé comprenant en outre, après la détermination (S203) du résultat de détection de la feuille d'électrode à détecter sur la base du rapport entre la différence de séchage et le second poids, les étapes consistant à :
établir une relation de concordance entre la feuille d'électrode à détecter, le résultat de détection correspondant et un identifiant de séparateur correspondant ; et stocker la relation de concordance dans une zone de stockage prédéfinie ; et
recevoir une instruction de collecte envoyée depuis un système de détection de batterie, extraire la relation de concordance de la zone de stockage et envoyer la relation de concordance au système de détection de batterie.

6. Appareil de détection d'une conformité d'une feuille d'électrode de batterie, comprenant :
un module de collecte (201), configuré pour collecter un premier poids correspondant à au moins une feuille d'électrode à détecter ;
un module de traitement (202), configuré pour sécher la feuille d'électrode à détecter dans un appareil de séchage pendant une durée prédéfinie pour collecter un second poids correspondant à la feuille d'électrode à détecter séchée ; et
un module de détermination (203), configuré pour déterminer un résultat de détection de la feuille d'électrode à détecter,
l'appareil étant **caractérisé en ce que** :
le module de détermination (203) est configuré pour déterminer un résultat de détection de la feuille d'électrode à détecter sur la base d'un rapport entre une différence de séchage et le second poids, la différence de séchage étant une différence entre le premier poids et le second poids ;
le module de traitement (202) étant configuré pour :
déterminer un attribut de matériau de la feuille d'électrode à détecter et sélectionner une plage de rapports prédéfinie correspondant à l'attribut de matériau ; et
déterminer le résultat de détection de la feuille d'électrode à détecter sur la base d'une relation de taille entre le rapport entre la différence de séchage et le second poids et la plage de rapports prédéfinie ;
le module de traitement (202) étant configuré pour :
déterminer des informations historiques de stockage de la feuille d'électrode à détecter, les informations historiques de stockage comprenant un environnement historique de stockage et une durée historique de stockage ; et
sélectionner la plage de rapports prédéfinie correspondant à l'attribut de matériau sur la base des informations historiques de stockage ;
déterminer que le résultat de détection de la feuille d'électrode à détecter est conforme lorsqu'il est détecté que le rapport entre la différence de séchage et le second poids est dans les limites de la plage de rapports prédéfinie ; et
déterminer que le résultat de détection de la feuille d'électrode à détecter n'est pas conforme lorsqu'il est détecté que le rapport entre la différence de séchage et le second poids est au-delà de la plage de rapports prédéfinie.

7. Support de stockage lisible par ordinateur, configuré pour stocker des instructions lisibles par ordinateur, les instructions, lorsqu'elles sont exécutées, exécutant les opérations du procédé de détection d'une conformité d'une feuille d'électrode de batterie selon l'une quelconque des revendications 1 à 5.
